# EUROPÄISCHE PATENTSCHRIFT

(11) **EP 2 145 154 B1**
(45) Veröffentlichungstag und Bekanntmachung des Hinweises auf die Patenterteilung: **07.08.2013**
(21) Anmeldenummer: 08749218.7
(22) Anmeldetag: 29.04.2008
(51) Int. Cl.: G01C 15/00, G05D 1/02, A63C 19/06

(54) **STEUERVERFAHREN ZUR ERZEUGUNG BODENGEBUNDENER MARKIERUNGEN UND REFERENZSTRAHLGENERATOR**
OPERATING METHOD FOR CREATING GROUND MARKINGS AND REFERENCE BEAM GENERATOR
PROCÉDÉ DE COMMANDE DESTINÉ À LA PRODUCTION DE MARQUAGES AU SOL ET GÉNÉRATEUR DE RAYON DE RÉFÉRENCE

(30) Priorität: 04.05.2007 EP 07107521
(43) Veröffentlichungstag der Anmeldung: 20.01.2010
(73) Patentinhaber: Leica Geosystems AG, 9435 Heerbrugg (CH)
(72) Erfinder: SCHNEIDER, Klaus, A-6850 Dornbirn (AT)
(74) Vertreter: Kaminski Harmann
(86) Internationale Anmeldenummer: PCT/EP2008/003458
(87) Internationale Veröffentlichungsnummer: WO 2008/135199

(56) Entgegenhaltungen:
- EP-A- 1 703 300
- WO-A-2006/013386
- CH-A- 520 977
- DE-A1- 4 013 950

## Beschreibung

Die Erfindung bezieht sich auf ein Steuerverfahren zur Erzeugung bodengebundener Markierungen nach dem Oberbegriff des Anspruches 1 und einem Referenzstrahlgenerator zur Erzeugung eines elektromagnetischen Referenzstrahls nach dem Oberbegriff des Anspruches 6.

Zum Erzeugen bodengebundener Markierungen, wie sie beispielsweise zum Festlegen von Spiel- und Sportfeldern Verwendung finden, werden Markiergeräte eingesetzt. Die Markiergeräte weisen einen Auslass für Markiersubstanz auf und sind im Allgemeinen fahrbar als Markierwagen ausgebildet. Vor Beginn der eigentlichen Markiertätigkeit müssen das Feld bzw. die zu markierenden Linien und/oder Flächen definiert abgesteckt werden. Dazu ist beispielsweise bekannt, den Markierbereich durch optische Leitstrahlen zu definieren. Anschliessend führt oder fährt eine Bedienperson den - Markiersubstanz auslassenden - Markierwagen entlang der Leitstrahlen.

Ein solches System wird beispielsweise in der WO 2006/013386 beschrieben. Durch eine Laserdiode und eine Optik wird ein Strahl mit fächerförmiger Geometrie und elliptischem Strahlquerschnitt erzeugt. Dieser Strahl wird zur Festlegung einer Seite eines Sportfeldes emittiert. Der zur Ausbringung der Markiersubstanz verwendete Markierwagen weist einen Detektor für die Laserstrahlung auf, wobei die Position des Markierwagens relativ zum vertikal orientierten Strahl angezeigt wird. Der Benutzer des Wagens kann diesen anhand des Laserfächers als Leitstrahl führen.

Durch den Laserfächer wird eine Referenzebene festgelegt, bezüglich derer die Markierung erfolgt.

Die Intensität des Laser strahls kann moduliert werden wodurch bei entsprechen dem Empfänger die Empfindlichkeit für Fremdlicht reduziert wird.

Aus der DE 40 13 950 A1 ist eine Lösung bekannt bei der die Führungslinie von einem Laserstrahl gebildet wird. In Messehallen sowie auf Park- und Spielplätzen soll sich ein Fahrzeug mit einem fest montierten Austragselement automatisch entlang des Laserstrahls bewegen und dabei gemäss einem vorgebbaren Markierprogramm in Abhängigkeit von der zurückgelegten Strecke Markierungen auf die Bodenfläche aufbringen. Die zurückgelegte Strecke wird über das Erfassen der Umdrehungen eines Messrades ermittelt.

Der Laser-Führungsstrahl wird vom ersten Ende der Führungslinie mit einer verstellbaren Halterung auf eine am zweiten Ende der Führungslinie angeordnete Justierplatte ausgerichtet. Nach dem Ausrichten des Laserstrahls wird ein Fahrzeug mit einem Empfänger entlang des Strahls geführt. Der Empfänger ermittelt mit einem zweidimensionalen Array von Photodioden die Abweichung des Fahrzeuges vom Führungsstrahl. Entsprechend der erfassten seitlichen Abweichung wird eine korrigierende Lenkbewegung des Fahrzeuges ausgelöst.

Um auf die komplizierte Fahrzeugsteuerung verzichten zu können, wird in der europäischen Patentanmeldung mit der Anmeldenummer EP 06101449.4 eine Lösung beschrieben, bei der die Lage des Austragselements relativ zum Fahrzeug durch die Halterung seitlich verstellt werden kann. Ein fest mit dem Austragselement verbundener Empfänger erfasst eine Abweichung der Lage des Austragselementes vom Führungsstrahl, wobei zusätzlich die Neigung des Fahrzeugs gemessen wird. Die Abweichung wird mit einer seitlichen Verschiebung des Austragselementes relativ zum Fahrzeug durch die Halterung kompensiert. Damit das Fahrzeug nicht soweit von der Führungslinie abweicht, dass die Kompensation durch die Halterung nicht mehr genügt, wird auch auf die nötige Kurskorrektur des Fahrzeuges hingewiesen.

Vertikale Unebenheiten eines Spielfeldes könnten dazu führen, dass der Laserstrahl vertikal über oder unter dem Empfänger auftrifft. Um den damit verbundenen Signalverlust zu vermeiden, wird als Signalstrahl ein vertikal fächerförmig auf- bzw. ausgeweiteter Laserstrahl eingesetzt, wobei der Öffnungswinkel bspw. etwa 1 bis 2 Grad betragen kann.

Aus der US 5 613 442 ist eine Lösung zum Korrigieren von Schienenlagen bekannt. Ein optischer Referenzstrahl wird mit einem auf einem Schienenfahrzeug angeordneten positionsempfindlichen Empfänger erfasst. Entsprechend der erfassten Lage des Referenzstrahles wird mit einem Arbeitselement die Schienenlage verstellt. Mit einem Neigungssensor wird die Neigung und mit einem Odometer die Längsposition des Schienenfahrzeuges erfasst. Wenn die Schiene etwas ansteigt oder absinkt, wird ein vertikal fächerförmig ausgeweiteter Referenzstrahl eingesetzt.

Zum Aufweiten eines Laserstrahls in einer Richtung wird in der DE 197 33 491 A1 eine konkave und in der US 6 796 040 eine konvexe Zylinderlinse eingesetzt. Im fächerförmig ausgeweiteten Strahl nimmt die Lichtintensität mit zunehmender Strahlweite bzw. zunehmender Distanz ab. Auf Distanzen mit zu kleiner Intensität kann der Empfänger kein Positionssignal ermitteln.

In der europäischen Patentanmeldung mit der Anmeldenummer EP 05108174.3 wird ein Referenzstrahlgenerator zur Führung eines Markierwagens für bodengebundene Markierungen beschrieben. Dieser weist ein gegenüber der Erdoberfläche definiert positionierbares Trägerelement, eine Laserdiode und Strahlführungsmittel zur Emission der Strahlung auf wenigstens ein Referenzziel auf, wobei die Strahlung mit einem asymmetrischen Strahlquerschnitt, insbesondere fächerförmig, emittiert wird und die Strahlführungsmittel bezüglich des Trägerelements definiert verstellbar sind. Durch eine optische Erfassungskomponente zur Erfassung und Bereitstellung der von dem Referenzziel reflektierten Strahlung, insbesondere ein Teleskop, kann eine Ausrichtung der Strahlung auf das Referenzziel erfolgen.

Um bei diesen bekannten Systemen eine Referenzebene festzulegen wird die Strahlung somit fächerförmig emittiert, so dass durch den Strahlquerschnitt und die Ausbreitungsrichtung eine Ebene im Raum definiert wird. Durch die fächerförmige Ausgestaltung bzw. den hieraus resultierenden elliptischen Strahlquerschnitt sinkt jedoch die Intensität der vom Detektor empfangenen oder empfangbaren Strahlung im Vergleich zu einem kleinen, nicht aufgefächerten Strahlquerschnitt. Diese Verringerung der empfangenen Intensität durch Strahlaufweitung macht sich insbesondere bei grösseren Entfernungen bemerkbar. Dabei ist die maximale Strahlintensität zumeist durch technische Gegebenheiten, wie z.B. der maximalen Leistung einer einzelnen Laserdiode, oder anderen Gegebenheiten begrenzt, wie z.B. durch Laserschutzanforderungen.

Der Nachteil der bekannten Lösungen besteht darin, dass zur Erzeugung der Referenzebene eine Asymmetrie des Strahlquerschnitts erzeugt werden muss, wodurch die Intensität der Strahlung sinkt, so dass entfernungsabhängig öfters kein Lagesignal mehr ermittelt werden kann. Wird hingegen der Strahlquerschnitt klein gehalten, kann beispielsweise die Orientierung der Ebene nicht mehr oder nicht hinreichend genau bestimmt werden oder aber der Empfänger wird vom Laserstrahl nicht mehr oder nur mit einem sehr kleinen Teil des Strahlquerschnitts getroffen.

Der Erfindung liegt nun die Aufgabe zugrunde, eine Lösung zu finden, welche auch bei grossen zu markierenden Bodenflächen mit Unebenheiten entlang einer gesamten Führungslinie die Lage des Empfängers relativ zur Führungslinie bzw. dem Leitstrahl erfassbar macht.

Wenn in der nachfolgenden Beschreibung der Erfindung ein Lichtstrahl bzw. Strahl erwähnt wird, so bedeutet dies keine Einschränkung auf sichtbares Licht. Der Terminus Lichtstrahlen umfasst zwar insbesondere den sichtbaren Spektralbereich, darüber hinaus sind erfindungsgemäss aber auch andere Bereiche der elektromagnetischen Strahlung umfasst, die in optischen Vermessungsgeräten verwendbar sind. Bevorzugt werden Lichtstrahlen in der Form von Laserstrahlen eingesetzt.

Diese Aufgaben werden erfindungsgemäss durch die Gegenstände der Ansprüche 1 und 6 bzw. der abhängigen Ansprüche gelöst oder die Lösungen weitergebildet.

Die erfindungsgemässe Lösung basiert auf der zeitlichen Trennung oder Variation von bestimmten optimierten Strahleigenschaften. Durch die Aufteilung der jeweils gewünschten Eigenschaften auf spezielle Zeitabschnitte, in denen dann eine Optimierung bzgl. der Ebenenprojektion oder aber der Intensität und damit der Empfangbarkeit erfolgt, können die an sich widerstrebenden Anforderungen vereint werden. Wenn zum Erfassen der Lage des Empfängers relativ zum Lichtstrahl die Strahlintensität bei einem vertikal von der Führungslinie beabstandeten Empfänger zeitlich variabel ist, so kann die Lagebestimmung durch den Empfänger entlang der gesamten Führungslinie jeweils in Phasen mit möglichst hoher Lichtintensität durchgeführt werden.

Um die Lage eines Empfängers relativ zum Strahl ermitteln zu können, weist der Empfänger zumindest in einer Richtung quer zur Ebene des Strahlfächers lichtempfindliche Sensoren auf. Bei der Lösung der Aufgabe wurde erkannt, dass bei einem in einer Richtung ausgeweiteten Lichtstrahl, der bei einem Empfänger ein Signal erzeugen soll, die Intensität des Strahls beim Empfänger über der Empfindlichkeitsgrenze der Sensoren des Empfängers liegen muss. Die maximale Distanz, bei der die Lage noch erfasst werden kann, hängt von der Leistung der Licht- bzw. Laserquelle, der Strahlaufweitung und der Empfindlichkeit der Sensoren ab.

Die Leistung der Laserquelle wird dadurch begrenzt, dass beim versehentlichen Augenkontakt keine Schädigungen der Augen auftreten dürfen. Die nötige vertikale Strahlausweitung wird durch den Höhenbereich vorgegeben, innerhalb dessen der Empfänger beim Ausbringen der Markierung liegen kann. Die ausnützbare Sensorempfindlichkeit hängt unter anderem davon ab, inwieweit Fremdlicht von der Erzeugung falscher Sensorsignale ausgeschlossen ist. Durch die Optimierung der Strahlform kann der Bereich, in dem eine Lagebestimmung möglich ist deutlich vergrössert werden.

Der Höhenbereich, innerhalb dessen der Empfänger beim Ausbringen der Markierung liegen kann, hängt von der Topographie der zu markierenden Bodenfläche ab. Bei Spielfeldern treten sowohl kleinräumige Unebenheiten als auch grossräumige Abweichungen von einer ebenen Fläche auf. Bei einem in vertikaler Richtung fächerförmig ausgeweiteten Strahl nimmt der Höhenbereich, der vom Strahl abgedeckt wird, mit zunehmender Distanz linear zu. Wenn nun der Aufweitungswinkel des Strahls so gewählt wird, dass er im Nahbereich auch bei einer maximalen kleinräumigen Niveauabweichung der Bodenfläche auf den Empfänger trifft, so ist er im Fernbereich meist weiter ausgedehnt als dies bei gängigen Topographien benötigt würde.

Die erfindungsgemässe Lösung sieht vor, den Strahl mit zeitlicher Veränderlichkeit so auszugestalten, dass die Lagebestimmung durch den Empfänger entlang der gesamten Führungslinie entfernungsabhängig jeweils bei möglichst hoher Lichtintensität realisiert werden kann. Dazu soll bei Empfängerlagen, die vertikal von der Führungslinie beabstandet sind, die Lichtintensität periodisch schwanken und die Positionsbestimmung in Phasen mit genügend hoher Intensität durchgeführt werden. Diese Phasen mit genügend hoher Intensität sind möglich, weil auf eine zeitlich konstante Intensität verzichtet wird. Zum Erzielen der periodischen Intensitätsschwankungen werden anschliessend rein beispielhaft Ausführungsvarianten dargelegt, die auch miteinander kombiniert werden können. Insbesondere können neben den dargestellten refraktiven auch reflektive Optikkomponenten, sowie gradientenoptische bzw. holographische Komponenten gleicher oder ergänzender Funktionalität verwendete werden. Auch können zur Erzielung der gewünschten optischen Eigenschaften neben einzelnen optischen Komponenten auch zusammengesetzte Optiken erfindungsgemäss verwendet werden.

Für Bodenflächen, deren Höhenabweichungen über den gesamten zu markierenden Bereich innerhalb einer festen unteren und einer festen oberen Grenze liegen, kann ein vertikal ausgeweiteter Laserstrahl mit im Wesentlichen konstanter Strahlausdehnung verwendet werden. Der Empfänger kann dabei so ausgebildet werden, dass er über einen vorgegebenen Empfänger-Höhenbereich die Lage des Laserstrahls erfassbar macht.

Wenn die Vertikalposition des Strahls genau zentriert zwischen dem Zentrum der minimalen und der maximalen Empfängerhöhe liegen würde, müsste der halbe Empfängerhöhenbereich und die vertikale Strahlausweitung zusammen der maximalen Höhenabweichung der Bodenfläche entsprechen. Wenn das Zentrum des Strahls bei der minimalen oder der maximalen Empfängerhöhe liegen würde, müssten der gesamte Empfängerhöhenbereich und die halbe vertikale Strahlausweitung zusammen der maximalen Höhenabweichung der Bodenfläche entsprechen.

Am Anfang eines Markiervorganges ist die genaue Lage des Strahls relativ zum zulässigen Höhenbereich des Empfängers nicht bekannt und gegebenenfalls weicht die Bodenfläche mehr als erwartet von der gewünschten Höhe ab. Um trotzdem mit einer konstanten vertikalen Strahlausdehnung immer ein Auftreffen des Strahls auf den Empfänger zu gewährleisten, müsste der Strahl unnötig hoch ausgebildet werden. Weil mit einer konstanten vertikalen Strahlausdehnung Probleme entstehen, wird gemäss einer ersten Ausführungsform das optische System so ausgebildet, dass die vertikale Strahlweite eines kolimierten Strahls periodisch zwischen einer maximalen und einer minimalen Strahlweite variiert. Wobei parallel hierzu auch die horizontale Strahlweite variiert werden kann.

Durch das Vergrössern und Verkleinern der vertikalen Strahlausdehnung kann die Lagebestimmung durch den Empfänger entlang der gesamten Führungslinie für alle vertikalen Abweichungen der Bodenfläche jeweils mit möglichst hoher Lichtintensität durchgeführt werden.

Um einen vertikal ausgeweiteten Strahl mit im Wesentlichen konstanter Strahlausdehnung zu erzielen, kann ein Laserstrahl mit einem kreisförmigen Querschnitt mit einer Linse in vertikaler Richtung aufgeweitet werden. Im Bereich der gewünschten vertikalen Ausdehnung wird mit einem Kollimatorelement, ausgehend vom aufgeweiteten Eintrittsstrahl oder unter Nutzung einer ohnehin vorhandenen Quelledivergenz, ein Austrittsstrahl mit geringer Divergenz, bzw. mit über die gesamte vertikale Ausdehnung im Wesentlichen zur Strahlachse paralleler Lichtausbreitung, erzeugt. Aufgrund der beschränkten Grösse der Sendeaperturen werden im Regelfall eine Divergenz des Strahls und damit die aus dem bekannte fächerförmige Geometrie verwendet. Erfindungsgemäss stellt dieser maximal expandierte Lichtfächer jedoch nur einen zeitlich begrenzten Zustand dar, wohingegen zu anderen Zeitpunkten andere Strahlquerschnitte erzeugt werden.

Zum Erzeugen einer zeitlich variablen Strahlhöhe werden im Strahlengang somit zuerst ein Aufweitungselement und dann das Kollimatorelement eingesetzt. Mit einer Bewegung des Kollimatorelementes vom Aufweitungselement weg und auf dieses zu kann die Strahlweite und damit der Strahlquerschnitt variiert werden.

Ein aus dem Kollimatorelement austretender Strahl hat beim Austritt eine im Vergleich zur Laserquelle reduzierte Intensität. Die Leistung der verwendeten Laserquelle kann so gewählt werden, dass die Flächenintensität im austretenden Strahl gerade noch für einen Augenkontakt zulässig ist. Dabei erhält man einen vertikal ausgeweiteten Strahl mit maximaler Intensität. Weil die Intensität im Strahl aufgrund der geringen Divergenz mit der Distanz nur minimal abnimmt, kann der Empfänger die Lagebestimmung über einen grossen Distanzbereich durchführen.

Um die benötigte Leistung der Laserquelle zu reduzieren, wird etwa ein Empfänger mit mehreren vertikal übereinander angeordneten Sensorlinien verwendet. Mit der Erhöhung des Empfängerhöhenbereichs kann der Strahlhöhenbereich und damit die nötige Leistung der Laserquelle reduziert werden.

Die Nachteile der aus dem Stande der Technik bekannten fächerförmigen Aufweitung des Laserstrahls können gegebenenfalls durch die gezielte Wahl des Aufweitungswinkels reduziert werden. Bei der Festlegung des Aufweitungswinkels muss entschieden werden, ob beim Empfänger gegebenenfalls Signalverluste im Nahbereich - aufgrund von Unebenheiten - oder im Fernbereich - aufgrund der zu kleinen Intensität - in Kauf genommen werden sollen. Weil die Optimierung des Winkels von der Topographie der jeweiligen Bodenfläche abhängt, ist sie für eine vielseitig einsetzbare Lösung nur bedingt geeignet.

Um die Lagebestimmung durch den Empfänger entlang der gesamten Führungslinie jeweils mit möglichst hoher Lichtintensität durchzuführen, kann die Strahlausweitung zeitlich variiert werden. Dazu wird ausgehend von einem engen Strahl der vertikale Öffnungswinkel des Strahls erhöht. Sobald die ansteigende Strahlhöhe beim Empfänger auf einen Sensor trifft, erfasst der Sensor das Auftreffen des Strahls. Aufgrund der Lage des Sensors, der den Strahl erfasst, kann die Lage des Strahls relativ zum Empfänger ermittelt werden.

Beim weiteren Ausweiten des Strahls kann die Intensität des Strahls beim Sensor soweit abnehmen, dass der Sensor das Auftreffen des Strahls nicht mehr erfassen kann. Nach dem Erreichen des maximalen Ausweitungswinkels des Strahles wird dieser Winkel wieder bis zum engen Strahl verkleinert. Wenn die Intensität des sich verengenden Strahls genügt um beim Sensor das Erfassen des Strahls auszulösen, stellt der Sensor das Auftreffen des Strahls fest bis der enge Strahl nicht mehr auf den Sensor trifft.

Neben der Bewegung einer Linse im optischen Strahlgang in Richtung der optischen Achse kann ein Öffnen und Schliessen des Ausbreitungswinkels beispielsweise auf stufenweise erzielt werden, in dem schrittweise andere oder zusätzliche Linsen oder gekrümmte Spiegel in den Strahlgang eingeführt und wieder entfernt werden.

Die in den Figuren näher erläuterten Ausführungsbeispiele können dabei mit sphärischen oder asphärischen sowie konvexen oder konkaven Linsentypen realisiert werden. So kann beispielsweise eine asphärische Linse verwendet werden, deren Krümmung vom Zentrum nach oben und unten gegen ihre Berandung zunimmt, wobei im Zentrum vorzugsweise im Wesentlichen keine Krümmung vorliegt. Wenn diese, z.B. auch zylindrisch ausgebildete Linse auf der Achse eines Strahles bewegt wird, dessen Querschnitt entlang der Achse variiert, so trifft der Strahl bei der einen Endposition der Linse nur auf den zentralen und bei der andern Endposition auch auf den Randbereich der Linse. Entsprechend führt die Bewegung der Linse zwischen den beiden Endpositionen zu einem Strahl dessen vertikale Ausweitung zwischen einem minimalen und einem maximalen Winkel variiert.

Gemäss einer anderen Realisierungsmöglichkeit wird die Strahlrichtung entlang einer Führungslinie in einer zum Leitstrahl im Wesentlichen vertikalen Ebene zeitlich variiert, um die Lagebestimmung durch den Empfänger entlang der gesamten Führungslinie jeweils mit möglichst hoher Lichtintensität durchzuführen. Die Führungslinie entspricht damit einer der Hauptachsen des elliptischen Strahlquerschnitts für einen aufgeweiteten Strahl. Damit der Empfänger unabhängig von dessen vertikaler Lage periodisch vom Strahl getroffen wird, erfolgt der Strahl dabei keine vertikale Aufweitung sondern die Strahlachse wird auf und ab geschwenkt. Dabei behält der Strahl entlang der Führungslinie im Wesentlichen die gleiche Intensität und die Sensoren sprechen somit auch bei grösserer Distanz auf den Strahl an.

Für die verschiedenen Realisierungsmöglichkeiten des Strahls durch Schwenken oder Aufweiten können veränderbare, z.B. schwenk- oder deformierbare Spiegel oder Linsen sowie entsprechende Kombinationen solcher Elemente eingesetzt werden. Wenn der Strahl etwas aufgeweitet und auch geschwenkt werden soll, so kann dies beispielsweise durch das koordinierte Kippen und Rückstellen der Linsen einer Aufweitungsoptik und einer Ausrichtungsoptik erzielt werden.

Eine Vertikalebene kann definiert werden durch einen vertikal ausgedehnten Strahl mit geringer Divergenz, einen in der Vertikalebene fächerförmig divergierenden Strahl oder einen in der Vertikalebene auf und ab geschwenkten Strahl mit kleinem Querschnitt. Wenn nun der Empfänger eine zweidimensionale Anordnung von Sensoren umfasst, so kann nebst der horizontalen Lage des Empfängers relativ zur Führungslinie auch die Kippausrichtung des Empfängers relativ zur Vertikalebene ermittelt werden, wobei die Vertikalebene im Wesentlichen senkrecht zur Ebene mit den Sensoren steht.

Die Sensoren sind vorzugsweise in einem zweidimensionalen Raster angeordnet. Die von den Sensoren innerhalb eines Zeitintervalls erfassten Intensitäten des Strahls werden so ausgewertet, dass die seitliche Kippausrichtung und eine horizontale Lage des Strahls relativ zum Raster abgeleitet werden können. Wenn der als seitliche Kippausrichtung ermittelte erste Kippwinkel relativ Horizontalausrichtung im Wesentlichen verschwindend klein ist, so steht die Sensorebene senkrecht zur Vertikalebene. Um zu bestimmen, ob die Sensorebene vertikal ausgerichtet oder um einen zweiten Kippwinkel um eine horizontale, senkrecht zur Führungslinie ausgerichtete Achse gekippt ist, können auch noch die bei den Sensoren auftretenden Phasenunterschiede ausgewertet werden.

Ist der erste und/oder zweite Kippwinkel nicht verschwindend klein, so liegt das Austragselement nicht senkrecht über der Stelle, die aus der vom Empfänger ermittelten Horizontallage ohne Kippkorrektur abgeleitet wird. Ohne Kippkorrektur wird lediglich die horizontale Versetzung zwischen Empfänger und Austragselement berücksichtigt. In einer Kipplage des Markierwagens ist die horizontale Versetzung etwas verändert. Wenn ein oder beide Kippwinkel bekannt sind, so kann ausgehend vom Abstand des Austragselementes über der Bodenfläche eine Kippkorrektur der Markierposition berechnet und für die Steuerung der Markiervorrichtung berücksichtigt werden.

Wenn der Empfänger Informationen an die Steuerung der Vorrichtung zum Erzeugen des Laserstrahls übermitteln kann, so ist es zweckmässig, die Steuerung des Strahls auf die Optimierung des Empfangs auszurichten. Beispielsweise kann beim Erhöhen der vertikalen Strahlausdehnung die Erhöhung gestoppt werden, wenn das gewünschte Lagesignal ermittelt ist. Analog kann das Auf- und Abschwenken eines engen Strahls auf einen Winkelbereich um die aktuelle Empfängerposition beschränkt werden.

Erhält der Empfänger eine Information zum Abstand zwischen Empfänger und Quelle des Laserstrahls, so kann bei einem vertikal fächerförmig aufgeweiteten Strahl der maximale Aufweitungswinkel entsprechend dem aktuellen Abstand eingestellt werden. Bei einem grossen Abstand kann der maximale Winkel kleiner gewählt werden als bei einem kleinen Abstand, da Höhenschwankungen bei einem grossen Abstand mit kleineren Winkeländerungen verbunden sind.

Die Zeichnungen erläutert das erfindungsgemäss Steuerverfahren zur Erzeugung bodengebundener Markierungen und den erfindungsgemässen Referenzstrahlgenerator anhand von Ausführungsbeispielen in rein schematischer Darstellung. Dabei zeigt
- Fig.1: einen gattungsgemässen Markierwagen zur Erzeugung bodengebundener Markierungen;
- Fig.2: den gattungsgemässen Markierwagen in Draufsicht;
- Fig.3: eine schematische Darstellung von Verfahren des Stands der Technik zum Steuern von Markierwagen;
- Fig.4: eine schematische Darstellung des fächerförmigen Leitstrahls von Verfahren des Stands der Technik;
- Fig.5A-D: eine schematische Darstellung von erfindungsgemässen Alternativen der Variation eines Leitstrahlquerschnitts in einem erfindungsgemässen Steuerverfahren;
- Fig.6: eine schematische Darstellung der Variation eines Leitstrahlquerschnitts auf einem Detektor eines Markierwagens;
- Fig.7: eine Darstellung der zeitlichen Variation des Strahlquerschnitts für einen erfindungsgemässen Referenzstrahlgenerator;
- Fig.8: eine schematische Darstellung eines ersten Ausführungsbeispiels der Optik eines erfindungsgemässen Referenzstrahlgenerators;
- Fig.9: eine schematische Darstellung eines zweiten Ausführungsbeispiels der Optik eines erfindungsgemässen Referenzstrahlgenerators;
- Fig.10: eine schematische Darstellung eines dritten Ausführungsbeispiels der Optik eines erfindungsgemässen Referenzstrahlgenerators;
- Fig.11: eine schematische Darstellung eines vierten Ausführungsbeispiels der Optik eines erfindungsgemässen Referenzstrahlgenerators;
- Fig.12: eine schematische Darstellung eines fünften Ausführungsbeispiels der Optik eines erfindungsgemässen Referenzstrahlgenerators;
- Fig.13: eine schematische Darstellung eines sechsten Ausführungsbeispiels der Optik eines erfindungsgemässen Referenzstrahlgenerators;
- Fig.14A-C: eine schematische Darstellung eines siebten Ausführungsbeispiels der Optik eines erfindungsgemässen Referenzstrahlgenerators und
- Fig.15: eine schematische Darstellung eines achten Ausführungsbeispiels der Optik eines erfindungsgemässen Referenzstrahlgenerators.

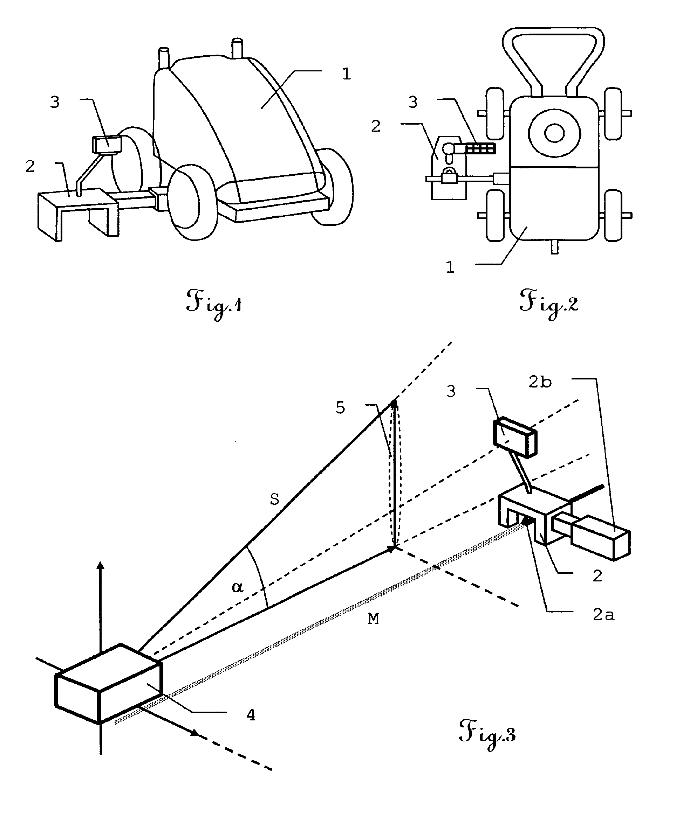

Fig.1 zeigt einen gattungsgemässen Markierwagen 1 zur Erzeugung bodengebundener Markierungen in seitlicher Ansicht und Fig.2 in Draufsicht. Der Markierwagen 1 weist eine seitlich angeordnete Ausbringungseinheit 2 und einen CCD-Flächenarray als optischen Detektor 3 auf. Der optische Detektor 3 ermittelt die Relativposition des Markierwagens 1 bzw. der Ausbringungseinheit 2 gegenüber einer durch einen Referenzstrahl als Leitstrahl aufgespannten Referenzebene. Durch eine gesteuerte Bewegung entlang des Leitstrahls können Linien zur Markierungen von Spielfeldern oder von ähnlichen Strukturen aufgebracht werden. Die Ausbringungseinheit 2 für die benötigten Markiersubstanzen verfügt über ein Gehäuse, in dem eine Elektronik zur Verarbeitung der Detektor-/Sensorausgaben und zur Bereitstellung von Anweisungen zur Steuerung der Ausbringungseinheit 2 angeordnet ist. Der optische Detektor 3 dient der Relativlage-Bestimmung. Mittels der Elektronik werden erfasste Lagewerte in Bezug auf Referenzwerte ausgewertet und gegebenenfalls Kompensationswerte ermittelt und bereitgestellt. Im Falle von Abweichungen der Lagewerte von den Referenzwerten erfolgt über die Elektronik und eine Aktuatorvorrichtung in der Ausbringungseinheit 2 eine Lageveränderung des Auslasses für die Markiersubstanz anhand der Kompensationswerte. Gegebenenfalls erfolgt auch ein Anhalten - und Wiederaufnehmen - des Markiervorgangs. Mit dem Ausrichten des Markierwagens 1 beim Markieren von Oberflächen an einer vordefinierten Referenzebene ist somit der Markiervorgang mit hoher Genauigkeit automatisiert durchführbar.

In Fig.3 wird ein Verfahren des Stands der Technik zum Steuern eines solchen Markierwagens veranschaulicht. Ein Referenzstrahlengenerator 4 erzeugt einen mit einem Öffnungswinkel α vertikal fächerförmig aufgeweiteten Laserstrahl S als Leitstrahl. Dieser Leitstrahl mit elliptischen Querschnitt 5 bzw. Strahlprofil definiert durch die Hauptachse seiner Ellipse eine fächerförmige Referenzebene, in der sich der Markierwagen bewegen und entlang der eine bodengebundene Markierung M erzeugt werden soll. Durch den optischen Detektor 3 wird der Laserstrahl S als Leitstrahl erfasst und eine Abweichung von der Referenzebene mittels einer Aktuatorvorrichtung 2b, welche die Ausbringungssteuereinheit 2 und die Position des Auslasses 2a für Markiersubstanz bewegt, kompensiert. Entsprechend der festgestellten Relativlage der Ausbringungseinheit 2 werden von der Elektronik Steueranweisungen zur Lageeinstellung der Ausbringungseinheit 2 generiert, wobei die Lage anhand einer Aktuatorvorrichtung 2b entsprechend verstellbar ist. Zudem kann aufgrund der linearen Ausdehnung des Laserstrahls S eine Neigung gegenüber der Ebene ermittelt werden, so dass auch neigungsbedingte Fehler berücksichtigt werden können.

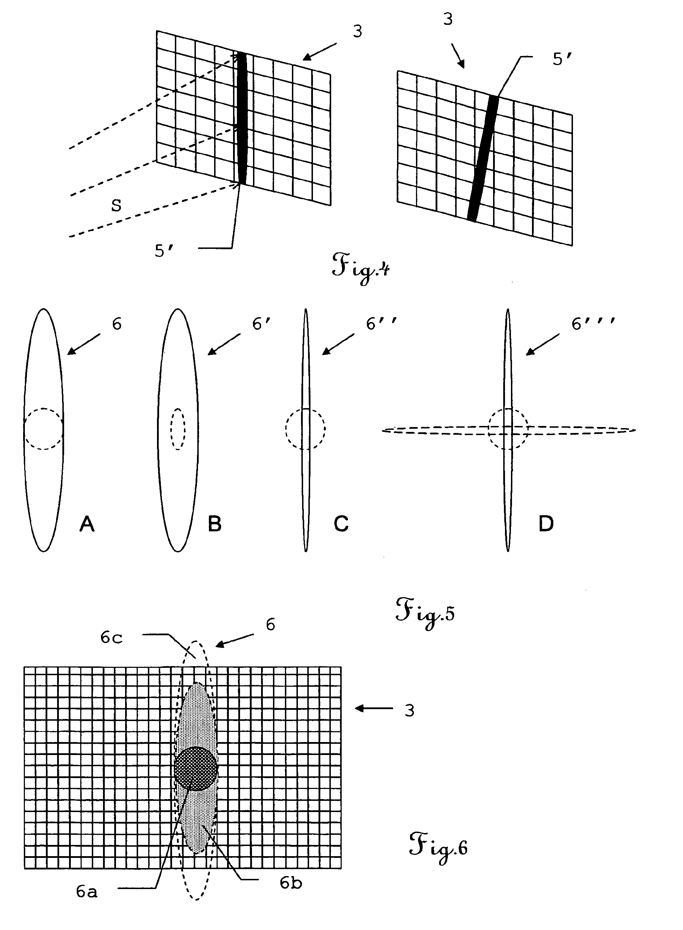

Die Erfassung des fächerförmigen Laserstrahls S durch den optischen Detektor 3 erläutert Fig.4 in schematischer Darstellung. Im der linken Situation ist anhand der Abbildung 5' des elliptischen Querschnitts des Laserstrahls S auf dem als optischer Detektor 3 verwendeten CCD-Flächensensor erkennbar, dass die Sensorfläche senkrecht auf zur Hauptachse des Profil des Laserstrahls S als Referenz ausgerichtet ist. Durch den Markierwagen verursachte Bewegungen führen zu einer Verlagerung der Abbildung 5' auf dem Detektor 3. Aufgrund der Bodengegebenheiten der meisten zu markierenden Oberflächen sind Abweichungen in der Seite relevanter als Abweichungen in der Höhe, so dass durch einen vertikal orientierten Laserfächer eine präzise Führung möglich ist. Für spezielle Anwendungen können jedoch auch andere Orientierungen des Laserfächers oder auch mehrere zueinander orientierte Laserfächer Verwendung finden.

Im rechten Beispiel ist die Abbildung 5' des Referenzstrahls auf dem Detektor 3 aus ihrer zentrischen und vertikalen Lage gewandert, die Sensorfläche ist also gegen die Referenzstrahl-Achse geneigt und leicht verschoben. Eine solche Abbildung 5' des Laserstrahls S wird beispielsweise dann erhalten, wenn der Detektor 3 bzw. die Ausbringungssteuereinheit - in Referenz zu den obigen Ausführungen - quer zur Fahrtrichtung geneigt ist.

Die erfindungsgemässe Ausgestaltung von Alternativen der Variation eines Leitstrahlquerschnitts in einem erfindungsgemässen Steuerverfahren zeigt Fig.5A-D in einer schematischen Darstellung.

In Fig.5A wird der Strahlquerschnitt 6 in einer Dimension zeitlich variiert. Ausgehend von einem kreis- oder punktförmigen Strahlquerschnitt wird dieser bis hin zu einer Ellipse aufgeweitet und danach wieder auf seinen ursprünglichen Querschnitt reduziert, so dass ein erster Öffnungswinkel der Emission periodisch zwischen einem maximalen und einem minimalen Öffnungswinkel variiert wird. In vielen Anwendungen wird die Emission mit einem entlang einer Strahlachse des elektromagnetischen Referenzstrahls fächerförmig vertikal ausgeweiteten Strahlquerschnitt erfolgen, so dass der vertikale Öffnungswinkel zeitlich variiert. Der Übergang von voll aufgeweiteter Ellipse zum Kreis kann dabei diskontinuierlich oder aber auch kontinuierlich, z.B. mit insgesamt sinusförmigen Verlauf der Variation erfolgen.

Fig.5B zeigt eine zeitliche Variation des Strahlquerschnitts 6' in zwei Dimensionen. Hierbei wird ein elliptischer Strahlquerschnitt 6' beibehalten und durch Ausdehnung der Hauptachsen vergrößert, wobei deren Verhältnis konstant bleiben oder ebenfalls zeitabhängig variiert werden kann, wobei dann ein erster und zweiter Öffnungswinkel in unterschiedlichem Ausmass, d.h. beispielsweise mit veränderlichem Verhältnis, variiert werden. Im Vergleich zum Beispiel aus Fig.5A wird hierbei ein zweiter Öffnungswinkel der Emission variiert. Eine solche Variation ist beispielsweise sinnvoll, wenn auch bei minimalem Querschnitt noch eine Richtung aus dem Strahl und damit eine relative Orientierung des Detektors ableitbar sein soll.

In Fig.5C erfolgt ebenfalls eine zeitliche Variation des Strahlquerschnitts 6" in zwei Dimensionen, bei denen jedoch der ursprünglich kreisförmige Querschnitt in einer Dimension vergrößert, in der anderen aber verkleinert wird, so dass bei gleicher Intensität eine grössere Längsausdehnung als bei unveränderter Breite der Ellipse erzielt werden kann.

Fig.5D zeigt ebenfalls eine zeitliche Variation des Strahlquerschnitts 6"' in zwei Dimensionen, wobei die beiden End- bzw. Extremzustände jeweils elliptisch und rechtwinklig zueinander orientiert sind. Der kreisförmige Querschnitt wird als Zwischenzustand durchlaufen. Eine solche Variation bietet den Vorteil einer genauen Festlegung von zwei Referenzebenen, die beispielsweise Relevanz besitzen kann, wenn sowohl die Vermeidung von Höhen- als auch von Seitenabweichungen erforderlich sind.

Fig.6 erläutert die Wirkung einer Variation eines Leitstrahlquerschnitts 6 auf einem Detektor 3 eines Markierwagens für das in Fig.5A gezeigte Ausführungsbeispiel. Im Zustand minimaler Ausdehnung besitzt Strahlquerschnitt 6a kreisförmige Geometrie und damit höchste Intensität, so dass auch auf grössere Entfernungen noch ein Signal durch den Detektor 3 bereitgestellt werden kann. Mit zunehmender Ausdehnung in vertikaler Richtung sinkt die Intensität bis diese schliesslich bei grösseren Entfernungen die Detektionsschwelle unterschreitet. Der maximal expandierte Strahlquerschnitt 6c kann nun nicht mehr erfaßt werden. Im Zwischenbereich zwischen dem Strahlquerschnitt 6a kreisförmiger Geometrie und dem maximal expandierten Strahlquerschnitt 6c wird ein Strahlquerschnitt 6b durchlaufen, der gerade noch detektiert und ausgewertet werden kann. Dieser weist damit gleichzeitig die maximal erfaßbare vertikale Ausdehnung auf und bietet somit ein Maximum an Präzision hinsichtlich der horizontalen Positionierung. Durch die kontinuierliche Variation des Strahlquerschnitts wird somit die Empfangbarkeit einer Richtungsinformation mit zwar entfernungsabhängiger, aber dennoch jeweils maximaler Genauigkeit gewährleistet.

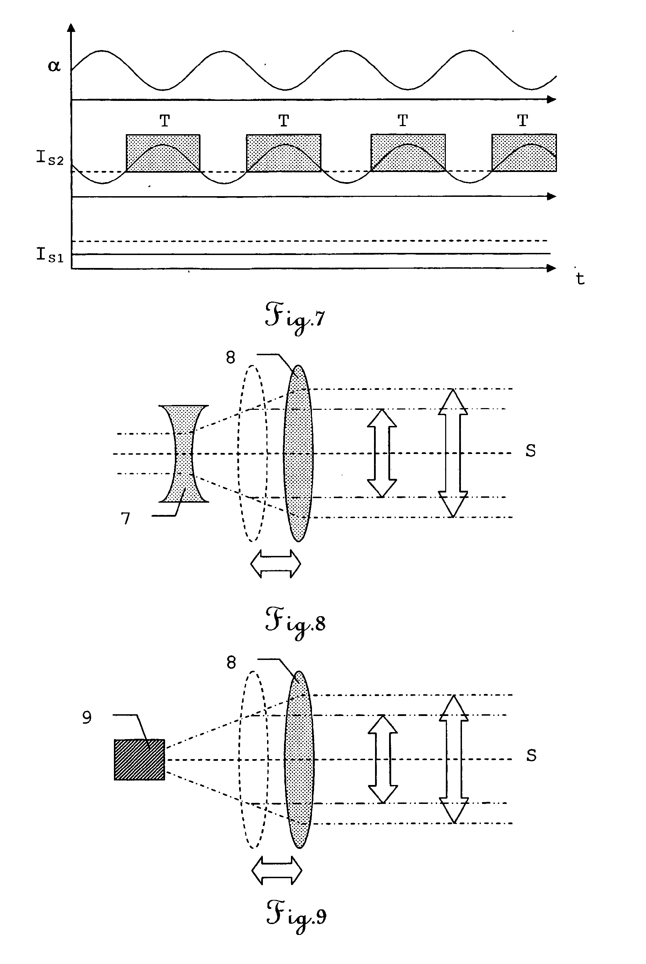

In Fig.7 erfolgt eine Darstellung des Strahlquerschnitts für einen Referenzstrahlgenerator des Stands der Technik und einen erfindungsgemässen Referenzstrahlgenerator. Aufgetragen sind die von einem optischen Detektor registrierten Strahlintensitäten I_{S1} des Referenzstrahlgenerators des Stands der Technik (unten) und I_{S2} eines erfindungsgemässen Referenzstrahlgenerators (Mitte) sowie der Öffnungswinkel α der Emission des Referenzstrahls (oben). Beim der hier dargestellten Situation eines Überschreitens einer gewissen Maximaldistanz sinkt die mit durchgezogener Linie gekennzeichnete Intensität I_{S1} des Referenzstrahlgenerators des Stands der Technik unter den mit gestrichelter Linie dargestellten Schwellenwert für eine Detektion. Beim Überschreiten dieser Maximaldistanz verliert ein System des Stands der Technik somit dauerhaft den Referenzstrahl.

In der Mitte wird die Situation für einen erfindungsgemässen Referenzstrahlgenerator erläutert. Die mit durchgezogener Linie gekennzeichnete Intensität I_{S2} variiert nun in Zeitabhängigkeit sinusförmig mit dem darüber angegebenen Öffnungswinkel α der Emission. Für die Zeiträume T liegt nun die Intensität I_{S2} über dem Schwellenwert des Detektors, so dass innerhalb dieser Zeitfenster ein Empfang des Referenzstrahls und eine Ableitung der Referenzebene möglich sind.

Ein erstes Ausführungsbeispiels der Optik eines erfindungsgemässen Referenzstrahlgenerators zeigt Fig.8 in schematischer Darstellung. Das optische System variiert die Intensität im vom Referenzstrahl abgedeckten Raumwinkel in Zeitabhängigkeit durch Veränderung des Strahlquerschnitts in einer Dimension, z.B. in vertikaler Richtung. Hierzu weist das optische System eine Zerstreuungslinse 7 zur Erzeugung eines divergenten Strahls auf, der eine in Richtung der optischen Achse längsverschiebbare Sammellinse 8 nachgeordnet ist. In diesem Beispiel ist die Sammellinse 8 als asphärische Linse so ausgebildet, dass innerhalb des zur Verfügung stehenden Bewegungsspielraums der divergente Strahl stets kollimiert wird. Durch Ausgestaltung der Zerstreuungslinse 7 als Zylinderlinse erfolgt eine Strahlaufweitung nur in einer Richtung, so dass durch die Veränderung des Abstandes von Zerstreuungslinse 7 zu Sammellinse 8 der Strahlquerschnitt vergrössert und verkleinert wird. Durch die Kollimierung des Laserstrahls S ist dessen maximale Ausdehnung mit der Linsengrösse korreliert, so dass zumeist nur kleine maximale Aufweitungen möglich sind.

Fig.9 zeigt eine schematische Darstellung eines zweiten Ausführungsbeispiels der Optik eines erfindungsgemässen Referenzstrahlgenerators bei der die intrinsisch vorhandene Divergenz einer Strahlquelle 9 genutzt wird. In einer zum ersten Ausführungsbeispiel analogen weise wird der Abstand einer Sammellinse 8 zur Strahlquelle 9 variiert und so der Strahlquerschnitt des Laserstrahls S verändert.

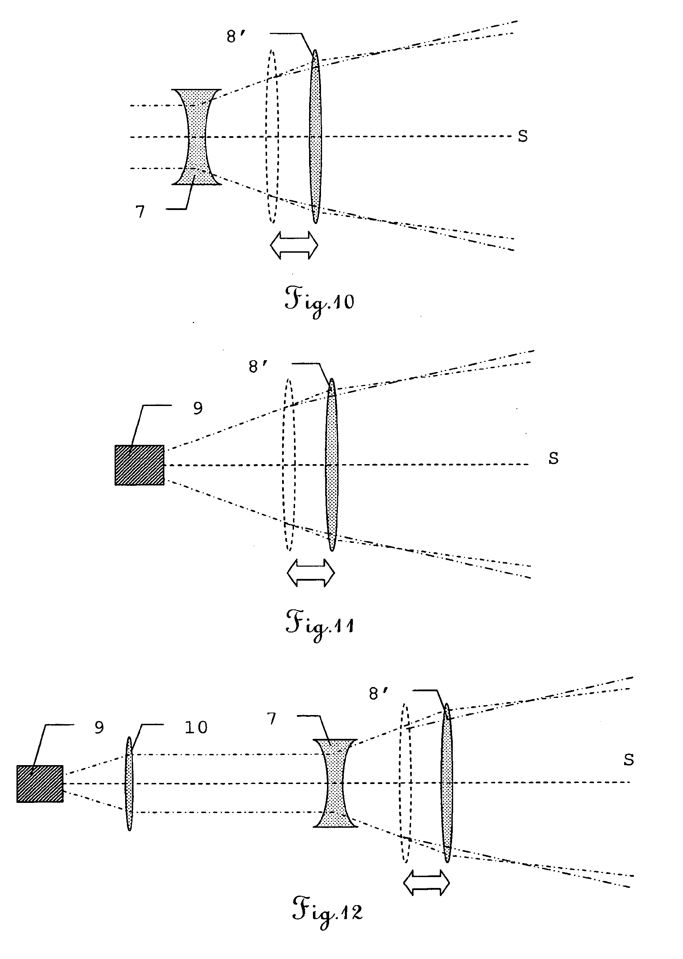

In einem in Fig.10 erläuterten dritten Ausführungsbeispiel wird die Divergenz eines Strahls nur modifiziert, nicht aber durch Kollimierung aufgehoben, so dass ein erster Öffnungswinkel der Emission kontinuierlich verändert wird. Ähnlich wie in Fig.8 weist das optische System ebenfalls eine Zerstreuungslinse 7 zur Erzeugung eines divergenten Strahls auf, der eine in Richtung der optischen Achse längsverschiebbare Sammellinse 8' nachgeordnet ist. In diesem Ausführungsbeispiel ist die Sammellinse 8' jedoch als so ausgebildet, dass innerhalb des zur Verfügung stehenden Bewegungsspielraums der divergente Strahl zwar hinsichtlich seiner Divergenz modifiziert, nicht aber vollständig kollimiert wird, was beispielsweise durch eine sphärische Linse realisierbar ist. Durch die Veränderung des Abstandes von Zerstreuungslinse 7 zu Sammellinse 8' kann der Strahlquerschnitt vergrössert und verkleinert werden, wobei die Ausgestaltung der Zerstreuungslinse 7 und ggf. auch der Sammellinse 8' als Zylinderlinse eine Strahlaufweitung in nur einer Richtung bewirkt. Durch die noch vorhandene Divergenz des Laserstrahls S ist dessen maximale Ausdehnung nicht mit der Linsengrösse korreliert. Durch die Verwendung jeweils geeigneter Linsen, z.B. astigmatischer Linsen, kann die Charakteristik des Strahlquerschnitts und seiner zeitlichen Veränderung angepasst werden.

Fig.11 zeigt eine schematische Darstellung eines zum dritten Ausführungsbeispiel analogen vierten Ausführungsbeispiels mit der Nutzung einer Quellendivergenz einer Strahlquelle 9.

Ein optisches Gesamtsystem aus Strahlquelle 9, Kollimatorlinse 10 und nachgeordneter Optik mit Zerstreuungslinse 7 und bewegbarer Sammellinse 8' gemäss Fig.10 wird in Fig.12 als ein fünftes Ausführungsbeispiel der Optik eines erfindungsgemässen Referenzstrahlgenerators dargestellt.

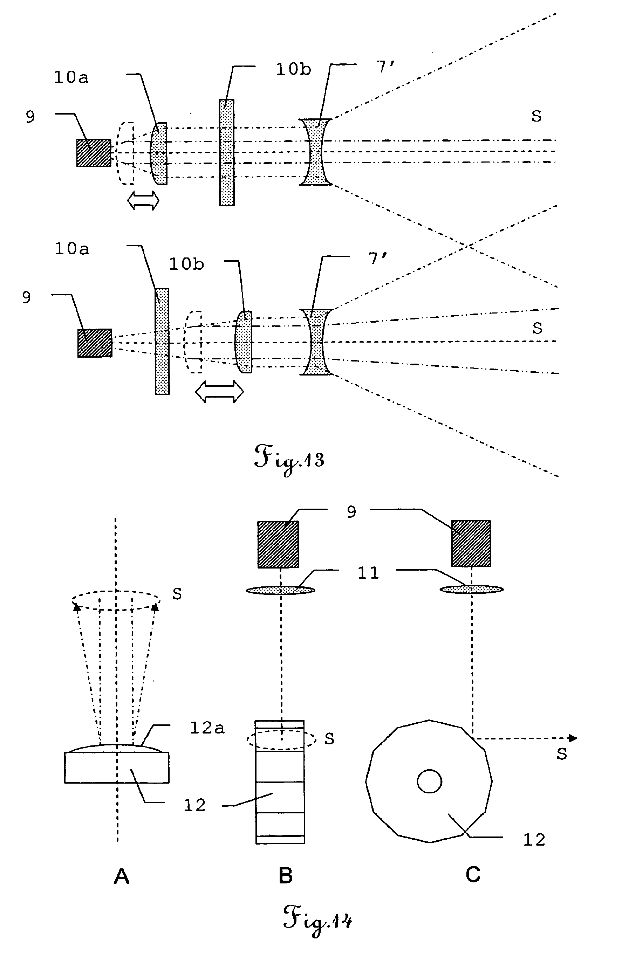

Die unabhängige Veränderbarkeit des Strahlquerschnitts mit zwei senkrecht zueinander orientierten Achsen und der Veränderung eines ersten und zweiten Öffnungswinkels der Emission wird in Fig.13 schematisch für ein sechstes Ausführungsbeispiel der Optik eines erfindungsgemässen Referenzstrahlgenerators dargestellt. Beide Darstellungen zeigen das gleiche optische System, wobei die obere Abbildung gegenüber der unteren Abbildung um 90° verdreht ist, so dass das optische System oben in Draufsicht und unten in Seitenansicht dargestellt wird.

In diesem Ausführungsbeispiel wird die natürliche anisotrope Divergenz einer Strahlquelle 9 genutzt und der Strahl durch eine nachgeordnete erste Linse 10a in nur einer ersten Richtung kollimiert, so dass in der zweiten Richtung die Divergenz erhalten bleibt. Die Kollimierung dieser zweiten Richtung erfolgt durch eine zweite Linse 10b. Sowohl erste Linse 10a als auch zweite Linse 10b sind entlang der optischen Achse relativ bewegbar. Beiden Linsen ist eine Zerstreuungslinse 7' nachgeordnet, die beispielsweise sphärisch ausgestaltet ist. Durch die jeweilige Relativbewegung der ersten Linse 10a und der zweiten Linse 10b wird der Strahlquerschnitt auf der Zerstreuungslinse 7' und damit die resultierende Divergenz des Laserstrahls S verändert. Eine aufeinander abgestimmte periodische Veränderung der Relativpositionen von erster Linse 10a und zweiter Linse 10b führen zu korrespondierenden Veränderungen des Strahlquerschnitts in zwei zueinander senkrechten Richtungen.

Die in den Fig.8-13 gezeigten Ausführungsbeispiele können selbstverständlich auch vermittels Komponenten der reflektiven Optik ausgestaltet werden und beispielsweise einen in Richtung der optischen Achse längsverschiebbaren Spiegel nutzen. Zudem sind die Komponenten, wie z.B. die Linsen, rein als funktionale Elemente dargestellt. Insbesondere können einzelne Komponenten auch zur Erzielung der Gesamtfunktionalität aus zusammengesetzten Teilen bestehen. Gleichfalls können erfindungsgemäss Hologramme oder Komponenten der Gradientenoptik in Transmission oder Reflexion Verwendung finden.

Fig.14A-C zeigen eine schematische Darstellung eines siebten Ausführungsbeispiels der Optik eines erfindungsgemässen Referenzstrahlgenerators. Zur Veränderung des Strahlquerschnitts wird eine mechanisch bewegbare Spiegeloberfläche 12a genutzt, wie sie beispielsweise ein Scannerrad 12 aufweist. Von einer Strahlquelle 9 wird Strahlung emittiert und durch eine Kollimatorlinse 11 kollimiert und auf das Scannerrad 12 geführt. Hierbei zeigen Fig.14B eine Frontal- und Fig.14C eine Seitenansicht des Systems. Die Spiegeloberfläche 12a der einzelnen Facetten des Scannerrads 12 weist eine Krümmung mit in Richtung der Bewegung veränderlichem Krümmungsradius auf, wobei dieser insbesondere in Richtung der Bewegung zyklischen variierend ausgebildet ist, so dass der erste Öffnungswinkel des elektromagnetischen Referenzstrahls variierbar ist. Wie für die in Fig.14A dargestellte Facette des Scannerrades 12 ersichtlich, ist der Öffnungswinkel des Laserstrahls S abhängig vom Krümmungsradius der Spiegeloberfläche 12a. Durch die Bewegung des Scannerrads 12 werden fortlaufend der Krümmungsradius und damit der Strahlquerschnitt verändert.

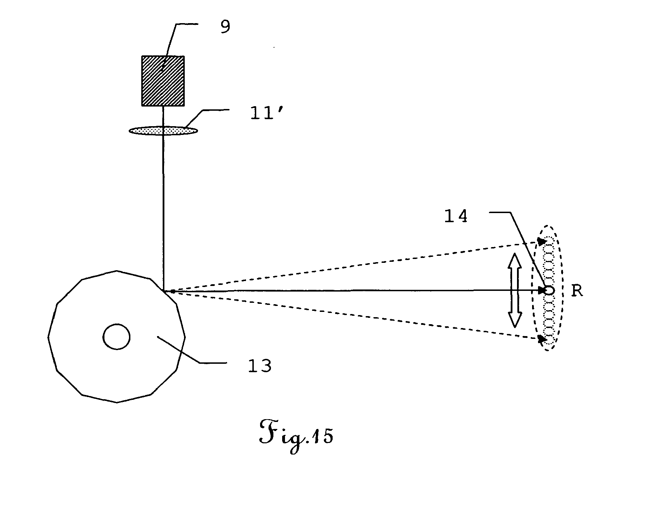

Ein achtes Ausführungsbeispiel der Optik eines erfindungsgemässen Referenzstrahlgenerators wird in Fig.15 schematische dargestellt. In diesem Ausführungsbeispiel variiert das optische System die Intensität im vom Referenzstrahl abgedeckten Raumwinkel in Zeitabhängigkeit dadurch, dass eine von einer Strahlquelle 9 erzeugter und über eine Optik 11' geformte Laseremission mit kleinem Querschnitt als Laserpunkt 14 innerhalb eines Raumwinkelbereichs R auf und ab bewegt wird, so dass dieser Bereich über eine volle Periode vollständig überstrichen wird. Zur scannenden Abtastung des Raumwinkelbereichs R kann vorteilhaft ein für Linienscanner übliches Scannerrad 13 verwendet werden.

## Patentansprüche

1. Steuerverfahren zur Erzeugung bodengebundener Markierungen (M), insbesondere von Sportfeldern, mit mindestens einem
- Erzeugen eines elektromagnetischen Referenzstrahls, wobei durch den Referenzstrahl als Leitstrahl eine Referenzebene festgelegt und die Intensität im vom Referenzstrahl abgedeckten Raumwinkel (R) in Zeitabhängigkeit variiert wird,
- Empfangen des Referenzstrahls, wobei anhand des empfangenen Referenzstrahls die Position einer Ausbringungseinheit (2) für Markiersubstanz relativ zu der Referenzebene ableitbar ist,
- Ableiten der Orientierung relativ zur Referenzebene, und
- Steuern einer Ausbringung der Markiersubstanz zur Erzeugung bodengebundener Markierungen (M) in Abhängigkeit von der Orientierung,
**dadurch gekennzeichnet, dass**
beim Erzeugen wenigstens ein erster Öffnungswinkel (α) der Emission des elektromagnetischen Referenzstrahls in Zeitabhängigkeit variiert wird.

2. Steuerverfahren nach Anspruch 1,
**dadurch gekennzeichnet, dass**
der erste Öffnungswinkel (α) der Emission periodisch zwischen einem maximalen und einem minimalen Wert des Öffnungswinkels variiert wird.

3. Steuerverfahren nach Anspruch 2,
**dadurch gekennzeichnet, dass**
die Emission mit einem entlang einer Strahlachse des elektromagnetischen Referenzstrahls fächerförmig vertikal ausgeweiteten Strahlquerschnitt erfolgt und der vertikale Öffnungswinkel zeitlich variiert.

4. Steuerverfahren nach einem der vorangehenden Ansprüche,
**dadurch gekennzeichnet, dass**
ein zweiter Öffnungswinkel der Emission in Zeitabhängigkeit variiert wird.

5. Steuerverfahren nach Anspruch 4,
**dadurch gekennzeichnet, dass**
erster Öffnungswinkel (α) und zweiter Öffnungswinkel mit zeitlich veränderlichem Verhältnis zueinander variiert werden.

6. Referenzstrahlgenerator (4) zur Erzeugung eines elektromagnetischen Referenzstrahls zur Durchführung des Steuerverfahrens nach Anspruch 1 bis 5 mit
- einer Strahlungsquelle (9) zur Erzeugung elektromagnetischer Strahlung,
- einem bezüglich eines ausgezeichneten Punktes oberflächenkontaktierbaren Gehäuse,
- einem optischen System zur Emission der elektromagnetischen Strahlung als Referenzstrahl, wobei das optische System die Intensität im vom Referenzstrahl abgedeckten Raumwinkel (R) in Zeitabhängigkeit variiert,
**dadurch gekennzeichnet, dass**
das optische System wenigstens einen ersten Öffnungswinkel (α) des elektromagnetischen Referenzstrahls in Zeitabhängigkeit variiert.

7. Referenzstrahlgenerator (4) nach Anspruch 6,
**dadurch gekennzeichnet, dass**
das optische System eine in Richtung der optischen Achse längsverschiebbare Linse (8,8',10a,10b) oder einen längsverschiebbaren Spiegel aufweist.

8. Referenzstrahlgenerator (4) nach Anspruch 6,
**dadurch gekennzeichnet, dass**
das optische System eine mechanisch bewegbare Spiegeloberfläche (12a) aufweist, insbesondere ein Scannerrad (12,13).

9. Referenzstrahlgenerator (4) nach Anspruch 8,
**dadurch gekennzeichnet, dass**
die Spiegeloberfläche (12a) eine Krümmung mit in Richtung der Bewegung veränderlichem Krümmungsradius aufweist, insbesondere mit in Richtung der Bewegung zyklischen variierendem Krümmungsradius, so dass der erste Öffnungswinkel des elektromagnetischen Referenzstrahls variierbar ist.

## Claims

1. Control method for producing ground markings (M), in particular on sports fields, comprising at least
- production of an electromagnetic reference beam, a reference plane being defined by the reference beam as a guide beam, the in the solid angle (R) covered by the reference beam being varied depending on time,
- reception of the reference beam, it being possible to derive the position of an application unit (2) for marking substance relative to the reference plane by means of the received reference beam,
- derivation of the orientation relative to the reference plane, and
- control of application of the marking substance for producing ground markings (M) depending on the orientation,
**characterized in that**, during production, at least a first opening (α) of the emission of the electromagnetic reference beam is varied as a function of time.

2. Control method according to Claim 1, **characterized in that** the first opening angle (α) of the emission is varied periodically between a maximum and minimum value of the opening angle.

3. Control method according to Claim 2, **characterized in that** the emission is effected with a beam cross-section extended vertically in a fan-like manner along a beam axis of the electromagnetic reference beam, and the vertical opening angle varies as a function of time.

4. Control method according to any of the preceding claims, **characterized in that** a second opening angle of the emission is varied.

5. Control method according to Claim 4, **characterized in that** first opening angle (α) and second opening angle are varied with time-variable ratio relative to one another.

6. Reference beam generator (4) for producing an electromagnetic reference beam for carrying out the control method according to Claims 1 to 5, comprising
- a radiation source (9) for producing electromagnetic radiation,
- a housing which is contactable on the surface with respect to a distinguished point,
- an optical system for the emission of the electromagnetic radiation as a reference beam, wherein the optical system varies the intensity in the solid angle (R) covered by the reference beam as a function of time,
**characterized in that** the optical system varies at least one first opening angle (α) of the electromagnetic reference beam as a function of time.

7. Reference beam generator (4) according to Claim 6, **characterized in that** the optical system has a lens (8, 8', 10a, 10b) which is longitudinally displaceable in the direction of the optical axis or a mirror which is longitudinally displaceable.

8. Reference beam generator (4) according to Claim 6, **characterized in that** the optical system has a mechanically moveable mirror surface (12a), in particular a scanner wheel (12, 13).

9. Reference beam generator (4) according to Claim 8, **characterized in that** the mirror surface (12a) has a curvature with a radius of curvature which is variable in the direction of movement, in particular with a radius of curvature varying cyclically in the direction of movement so that the first opening angle of the electromagnetic reference beam is variable.

## Revendications

1. Procédé de commande destiné à la production de marquages au sol (M), en particulier de terrains de sport, avec au moins une
- production d'un faisceau de référence électromagnétique, un plan de référence étant fixé par le faisceau de référence comme faisceau de guidage et l'intensité variant en fonction du temps dans l'angle solide (R) couvert par le faisceau de référence,
- réception du faisceau de référence, la position d'une unité d'épandage (2) pour la substance de marquage pouvant être dérivée par rapport au plan de référence à l'aide du faisceau de référence reçu,
- dérivation de l'orientation par rapport au plan de référence et
- commande d'un épandage de la substance de marquage pour la production de marquages au sol (M) en fonction de l'orientation,
**caractérisé en ce que**,
lors de la production, au moins un premier angle d'ouverture (α) de l'émission du faisceau de référence électromagnétique varie en fonction du temps.

2. Procédé de commande selon la revendication 1,
**caractérisé en ce**
**que** le premier angle d'ouverture (α) de l'émission varie périodiquement entre une valeur maximale et une valeur minimale de l'angle d'ouverture.

3. Procédé de commande selon la revendication 2,
**caractérisé en ce**
**que** l'émission est effectuée avec une section de faisceau élargie verticalement en forme d'éventail le long d'un axe de faisceau du faisceau de référence électromagnétique et l'angle d'ouverture vertical varie dans le temps.

4. Procédé de commande selon l'une des revendications précédentes,
**caractérisé en ce**
**qu'**un second angle d'ouverture de l'émission varie en fonction du temps.

5. Procédé de commande selon la revendication 4,
**caractérisé en ce**
**que** le premier angle d'ouverture (α) et le second angle d'ouverture varient l'un par rapport à l'autre avec un rapport qui varie dans le temps.

6. Générateur de faisceau de référence (4) pour la production d'un faisceau de référence électromagnétique pour exécuter le procédé de commande selon la revendication 1 à 5 avec
- une source de faisceau (9) pour la production de rayonnement électromagnétique,
- un bâti qui peut être mis en contact avec la surface par rapport à un point remarquable,
- un système optique pour l'émission du rayonnement électromagnétique comme faisceau de référence, le système optique variant l'intensité en fonction du temps dans l'angle solide (R) couvert par le faisceau de référence,
**caractérisé en ce que**
le système optique fait varier au moins un premier angle d'ouverture (α) du faisceau de référence électromagnétique en fonction du temps.

7. Générateur de faisceau de référence (4) selon la revendication 6,
**caractérisé en ce que**
le système optique présente une lentille (8, 8', 10a, 10b) déplaçable dans le sens de la longueur en direction de l'axe optique ou un miroir déplaçable dans le sens de la longueur.

8. Générateur de faisceau de référence (4) selon la revendication 6,
**caractérisé en ce que**
le système optique présente une surface de miroir (12a) mobile mécaniquement, en particulier une roue de scanner (12, 13).

9. Générateur de faisceau de référence (4) selon la revendication 8,
**caractérisé en ce que**
la surface du miroir (12a) présente une courbure avec un rayon de courbure variable dans la direction du mouvement, en particulier avec un rayon de courbure qui varie cycliquement dans la direction du mouvement si bien que le premier angle d'ouverture du faisceau de référence électromagnétique peut être varié.
